# EUROPÄISCHE PATENTSCHRIFT

(11) **EP 1 278 276 B1**
(45) Veröffentlichungstag und Bekanntmachung des Hinweises auf die Patenterteilung: **27.02.2008**
(21) Anmeldenummer: 02014582.7
(22) Anmeldetag: 02.07.2002
(51) Int. Cl.: H01R 39/38

(54) **Bürstenhalter für elektrische Kommutatormaschinen**
Brush holder for electrical commutator machine
Porte balais pour machine électrique à commutateur

(30) Priorität: 18.07.2001 DE 10134863
(43) Veröffentlichungstag der Anmeldung: 22.01.2003
(73) Patentinhaber: ROBERT BOSCH GMBH, 70442 Stuttgart (DE)
(72) Erfinder: Schneider, Dariusz, 77836 Rhienmuenster (DE)

(56) Entgegenhaltungen:
- EP-A- 1 075 076
- US-A- 5 204 565

## Beschreibung

### Stand der Technik

Die Erfindung geht aus von einem Bürstenhalter für elektrische Kommutatormaschinen nach dem Oberbegriff des Anspruchs 1.

Bei einem bekannten schüttelfesten Bürstenhalter dieser Art ist die Leiterplatte im Bereich ihrer gegenüberliegenden Plattenkanten in je eine paßgenaue Führung eingesetzt und in den beiden Führungen mittels einer Vergußmasse unverschieblich befestigt. Die elektrischen Verbindungen zwischen der Leiterplatte und den Steckkontakten des Anschlußsteckers werden durch dünne elastische Kontaktfahnen realisiert, die an Leiterbahnen der Leiterplatte und an den Kontaktenden der Steckerkontakte angelötet sind. Die flexiblen Kontaktfahnen sind deshalb erforderlich, damit aufgrund der verschiedenen Werkstoffe von Trägerplatte und darin spiellos gehaltener Leiterplatte und ihrer verschiedenen Wärmeausdehnungskoeffizienten bei Erwärmung auftretende mikroskopische Relativbewegungen zwischen Trägerplatte und Leiterplatte keine Risse in den Lötstellen verursachen, die mit der Schüttelbeanspruchung des Bürstenhalters zu Wackelkontakten oder Kontaktunterbrechungen und damit zum vorzeitigen Ausfall der Kommutatormaschine führen. Ein Nachteil dieser flexiblen und filigranen Kontaktfahnen ist jedoch, daß sie beim Schweiß- oder Lötprozeß sporadisch und unkontrolliert verbrannt werden und somit infolge des Fehlens der einen oder anderen elektrischen Verbindung eine für den automatischen Fertigungsprozeß der Bürstenhalter nicht akzeptierbare hohe Ausschußquote entsteht.

Dokument EP-A-1 075 076 beschreibt einen Bürstenhalter nach der Präambel des Anspruchs 1.

### Vorteile der Erfindung

Der erfindungsgemäße Bürstenhalter mit den Merkmalen des Anspruchs 1 hat den Vorteil, daß die Leiterplatte ohne Verkleben oder Vergießen schüttelfest an der Trägerplatte angebunden ist und die stabilen Stifte unter keinen Umständen im Löt- oder Schweißprozeß verbrannt werden können, so daß die elektrische Kontaktierung ausnahmslos gewährleistet ist. Die steifen Stifte übernehmen neben der Herstellung der elektrischen Verbindung zwischen den Steckerkontakten und der Leiterplatte auch eine mechanische Befestigungsfunktion für die Leiterplatte an der Trägerplatte. Durch die Halterung der Stifte über Preßpassungen in der Leiterplatte wird eine mechanische Belastung der Lötverbindungen zwischen der Leiterplatte und den Stiften bei thermischen Ausdehnungen vermieden. Insgesamt ergibt sich eine hochschüttelfeste elektrische und mechanische Verbindung zwischen der Leiterplatte und der Trägerplatte.

Durch die in den weiteren Ansprüchen aufgeführten Maßnahmen sind vorteilhafte Weiterbildungen und Verbesserungen des im Anspruch 1 angegebenen Bürstenhalters möglich.

Gemäß einer vorteilhaften Ausführungsform der Erfindung wird die partielle Festlegung der Leiterplatte in der Trägerplatte so vorgenommen, daß für die Leiterplatte die Möglichkeit des Kippens der Leiterplatte in der Plattenebene gegeben ist. Durch das mögliche leichte Kippen der Leiterplatte können beim Fertigungsprozeß Abstandstoleranzen zwischen den Stiften einerseits und den Enden der Steckerkontakte anderseits ausgeglichen werden.

Gemäß einer bevorzugten Ausführungsform der Erfindung wird die partielle Festlegung der Leiterplatte an der Trägerplatte mittels zweier, einander mit Abstand gegenüberliegender Taschen vorgenommen, in die die Leiterplatte mit nur einem Teil ihrer Plattenkantenlänge eingesetzt ist. Dabei liegt die Leiterplatte mit Spiel in jeder Tasche ein, und nur in ihrem Bodenbereich ist jede Tasche der Stärke oder Dicke der Leiterplatte angepaßt, so daß die Leiterplatte lediglich im Bereich der Taschenböden in Querrichtung spiellos gehalten ist.

### Zeichnung

Die Erfindung ist anhand zweier in der Zeichnung dargestellter Ausführungsbeispiele in der nachfolgenden Beschreibung näher erläutert. Es zeigen jeweils in perspektivischer Darstellung:
- Fig. 1 und 2: jeweils einen Ausschnitt eines Bürstenhalters gemäß einem ersten und zweiten Ausführungsbeispiel,
- Fig. 3: ausschnittweise einen Schnitt längs der Linie III - III in Fig. 1.

### Beschreibung der Ausführungsbeispiele

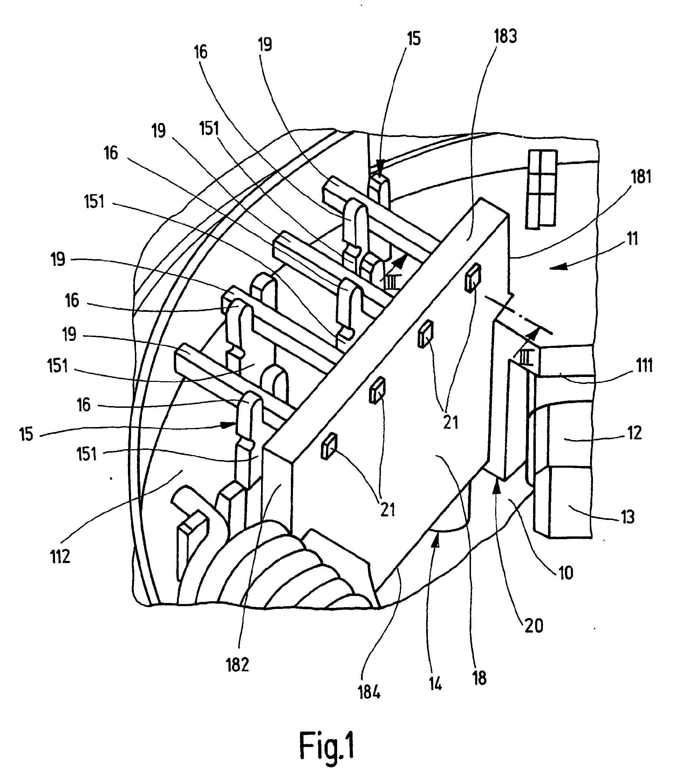

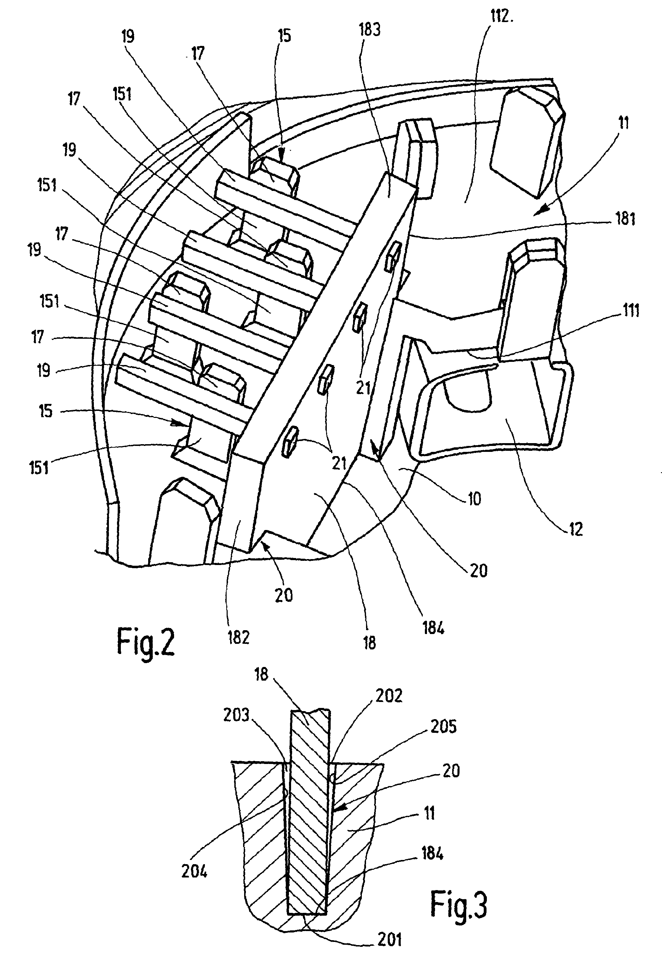

Der in Fig. 1 und Fig. 2 perspektivisch ausschnittweise dargestellte Bürstenhalter für eine elektrische Kommutatormaschine, insbesondere für einen Gleichstrommotor für den Einsatz in Kraftfahrzeugen, weist einen Grundkörper oder eine Trägerplatte 11 auf, die koaxial zum Kommutator am Maschinengehäuse befestigt wird. An der Trägerplatte 11 sind sog. Bürstenköcher 12 für die axial verschiebliche Aufnahme einer Kommutatorbürste 13 um gleiche Umfangswinkel zueinander versetzt angeordnet. Der in Fig. 1 und 2 dargestellte Bürstenträger weist beispielsweise zwei an einer den Kommutator umschließenden zentralen Öffnung 10 in der Trägerplatte 11 diametral angeordnete Bürstenköcher 12 auf. In Fig. 1 ist die in dem Bürstenköcher 12 aufgenommene Kommutatorbürste 13 dargestellt, die unter dem Druck einer im Bürstenköcher 12 einliegenden Bürstenandruckfeder auf den Kommutator aufgedrückt wird. In Fig. 2 ist der eine von zwei Bürstenköchern 12 ohne einliegende Kommutatorbürste 13 zu sehen.

In der Trägerplatte 11 ist ein Anschlußstecker 14 integriert, der eine Mehrzahl von Steckerkontakten 15 mit für eine elektrische Kontaktierung ausgebildeten Kontaktenden 151 aufweist. Der Anschlußstecker 14 ist auf der in Fig. 1 und 2 unteren Plattenfläche 111 der Trägerplatte 11 angeformt, und die parallel zur Plattenachse der Trägerplatte 11 verlaufenden Steckerkontakte 15 stehen mit ihren Kontaktenden 151 auf der oberen Plattenfläche 112 der Trägerplatte 11 über die Trägerplatte 11 vor. Die Kontaktenden 151 sind in dem Ausführungsbeispiel der Fig. 1 als Gabeln 16 und in dem Ausführungsbeispiel der Fig. 2 als Flachstücke 17 ausgebildet und dienen dem Anschluß einer elektrischen Verbindung zu einer mit Elektronikbauteilen besetzten Leiterplatte 18, die an der Trägerplatte 11 gehalten ist.

Zur Herstellung einer schüttelfesten mechanischen Halterung zwischen der vorzugsweise aus Kunststoff hergestellten Trägerplatte 11 und der Leiterplatte 18, die eine thermisch unterschiedliche Ausdehnung von Trägerplatte 11 und Leiterplatte 18 ohne mechanische Belastung der Lötstellen an der Leiterplatte 18 gewährleistet, ist einerseits die Leiterplatte 18 an zwei voneinander abgekehrten. Plattenkanten 181 und 182 nur partiell an der Trägerplatte 11 festgelegt und sind andererseits die elektrischen Verbindungen zwischen den Kontaktenden 151 der Steckerkontakte 15 und der Leiterplatte 18 mittels stabiler, steifer Stifte 19 gebildet. Die Stifte 19 sind einerseits mit einer Preßpassung in die Leiterplatte 18 eingepreßt und andererseits an den Kontaktenden 151 fest angebunden. Die Anbindung erfolgt bei den als Gabeln 16 ausgebildeten Kontaktenden 151 (Fig. 1) durch Warmprägen der Gabeln 16 und bei den als Flachstücke 17 ausgebildeten Kontaktenden (Fig. 2) durch Flachschweißen.

Zur partiellen Festlegung der Leiterplatte 18 an der Trägerplatte 11, die im übrigen so vorgenommen ist, daß die Leiterplatte 18 in der Plattenebene leicht zu kippen vermag, sind an der Leiterplatte 18 zwei einander mit Abstand gegenüberliegende Taschen 20 angeformt, in die die Leiterplatte 18 mit einem Abschnitt der Plattenkanten 181 und 182 eingesetzt ist. Die Taschen 20 sind identisch ausgebildet und stehen an der unteren Plattenfläche 111 der Trägerplatte 11, an der auch der Anschlußstecker 14 angeordnet ist, vor.

Wie aus der Schnittdarstellung der Fig. 3 ersichtlich ist, weist jede Tasche 20 einen Taschenboden 201, eine diesen gegenüberliegende Taschenöffnung 202 und drei rechtwinklig zueinander versetzt angeordnete Taschenwände 203, 204 und 205 auf. Jede Tasche 20 hat damit eine U-förmige Querschnittskontur, wobei die beiden U-Öffungen der Taschen 20 einander zugekehrt sind. Da die Taschentiefe der Taschen 20 kleiner ist als die Länge der Plattenkanten 181, 182 der Leiterplatte 18, steht die in die Taschen 20 eingesetzte Leiterplatte 18 partiell über die obere Plattenfläche 112 der Trägerplatte 11 vor, wobei das Überstehmaß etwa dem Überstehmaß der Kontaktenden 151 entspricht.

Wie aus der Schnittdarstellung der Fig. 3 zu erkennen ist, wird die in die Taschen 20 eingesetzte Leiterplatte 18 mit Spiel zu den Taschenwänden 204, 205 aufgenommen, und nur in der Nähe des Taschenbodens 201 ist die lichte Weite der Taschen 20 an die Plattendicke oder Plattenstärke der Leiterplatte 18 angepaßt, so daß sie hier spiellos aufgenommen ist. In Längsrichtung ist die Leiterplatte 18 ebenfalls mit Spiel zwischen den Taschenwänden 203 der beiden Taschen 20 gehalten, so daß die Leiterplatte 18 in den Taschen 20 in Plattenebene wenig gekippt werden kann. Die Stifte 19 sind in dem aus den Taschen 20 herausragenden Abschnitt der Leiterplatte 18 angeordnet, und zwar nahe und längs der oberen Plattenkante 183. Die Stifte 19 stehen rechtwinklig von der Leiterplatte 18 ab und erstrecken sich bei in die Taschen 20 eingesetzter Leiterplatte 18 parallel zur Trägerplatte 11. Damit ist die Leiterplatte 18 nahe ihrer unteren Plattenkante 184 spiellos in den Taschen 20 und im Bereich ihrer oberen Plattenkante 183 über die stabilen Stifte 19 spiellos an den Kontaktenden 151 der Steckerkontakte 15 festgelegt. Insgesamt ergibt sich damit eine schüttelfeste Befestigung der Leiterplatte 18 an der Trägerplatte 11, die eine thermische Ausdehnung von Leiterplatte 18 und Trägerplatte 11 zuläßt ohne daß die Lötverbindungen für die elektrische Kontaktierung zwischen der Leiterplatte 18 und den Stiften 19 mechanisch belastet werden. Die Lötverbindungen für die elektrischen Kontaktierung der Leiterplatte 18 sind in Fig. 1 und 2 mit 21 gekennzeichnet.

## Patentansprüche

1. Bürstenhalter für elektrische Kommutatormaschinen, mit einer Trägerplatte (11), mit einem an der Trägerplatte (11) angeordneten, elektrischen Anschlußstecker (14), der mehrere Steckerkontakte (15) mit für eine elektrische Kontaktierung ausgebildeten Kontaktenden (151) aufweist, mit einer an der Trägerplatte (11) gehaltenen Leiterplatte (18) und mit elektrischen Verbindungen zwischen den Kontaktenden (151) der Steckerkontakte (15) und der Leiterplatte (18), **dadurch gekennzeichnet, daß** die Leiterplatte (18) an zwei voneinander abgekehrten Plattenkanten (181, 182) partiell an der Trägerplatte (11) festgelegt ist, und daß die elektrischen Verbindungen von steifen, stabilen Stiften (19) gebildet sind, die einerseits mit Preßpassung in die Leiterplatte (18) eingepreßt und andererseits an den Kontaktenden (151) fest angebunden sind.

2. Bürstenhalter nach Anspruch 1, **dadurch gekennzeichnet, daß** die partielle Festlegung der Leiterplatte (18) so vorgenommen ist, daß die Leiterplatte (18) in der Plattenebene wenig zu kippen vermag.

3. Bürstenhalter nach Anspruch 1 oder 2, **dadurch gekennzeichnet, daß** die Festlegung der Leiterplatte (18) mittels zweier einander mit Abstand gegenüberliegender Taschen (20) vorgenommen ist, in die die Leiterplatte (18) mit einem nur über einen Teil ihrer Plattenkantenlänge sich erstreckenden Abschnitt eingesetzt ist.

4. Bürstenhalter nach Anspruch 3, **dadurch gekennzeichnet, daß** jede Tasche (20) einen Taschenboden (201), eine diesem gegenüberliegende Taschenöffnung (202) zum Einführen der Leiterplatte (18) und drei rechtwinklig zueinander angeordnete Taschenwände (203, 204, 205) aufweist, die die Leiterplatte (18) längs eines Abschnitts des Plattenkantenbereichs umgreifen.

5. Bürstenhalter nach Anspruch 4, **dadurch gekennzeichnet, daß** die Tasche (20) eine gegenüber der Plattenkantenlänge der Leiterplatte (18) wesentlich geringere Taschentiefe aufweisen und daß die Taschen (20) nahe den Taschenböden (201) der Plattenstärke der Leiterplatte (18) angepaßt sind.

6. Bürstenhalter nach einem der Ansprüche 3 - 5, **dadurch gekennzeichnet, daß** die Kontaktenden (151) der Steckerkontakte (15) von der einen Plattenfläche (112) der Trägerplatte (11) abstehen und daß die Kontaktenden (151) der Steckerkontakte (15) und die vorzugsweise einstückig an die Trägerplatte (11) angeformten Taschen (20) auf der davon abgekehrten Plattenfläche (111) von der Trägerplatte (11) abstreben.

7. Bürstenhalter nach Anspruch 5 oder 6, **dadurch gekennzeichnet, daß** die Stifte (19) in dem aus den Taschen (20) herausragenden, über die Plattenfläche (112) der Trägerplatte (11) überstehenden Abschnitt der Leiterplatte (18) angeordnet sind.

8. Bürstenhalter nach Anspruch 7, **dadurch gekennzeichnet, daß** die Stifte (19) rechtwinklig von der Leiterplatte (18) abstehen und sich bei in die Taschen (20) angesetzter Leiterplatte (18) etwa parallel zur Trägerplatte (11) erstrecken.

9. Bürstenhalter nach einem der Ansprüche 1 - 8, **dadurch gekennzeichnet, daß** die Kontaktenden (151) als Gabeln (16) ausgebildet sind, daß die Stifte (19) in den Gabelöffnungen der Gabeln (16) einliegen und daß die Anbindung der Stifte (19) an die Kontaktenden (151) durch Warmprägen der Gabeln (16) vorgenommen ist.

10. Bürstenhalter nach einem der Ansprüche 1 - 8, **dadurch gekennzeichnet, daß** die Kontaktenden (151) als Flachstücke (17) ausgebildet sind, an denen die Stifte (19) anleigen, und daß die Anbindung der Stifte an die Kontaktenden (151) durch Flachschweißen hergestellt ist.

## Claims

1. Brush holder for electrical commutator machines, having a support plate (11), having an electrical connection plug (14) which is arranged on the support plate (11) and has a plurality of plug contacts (15) with contact ends (151) which are designed to make electrical contact, having a printed circuit board (18) which is held on the support plate (11), and having electrical connections between the contact ends (151) of the plug contacts (15) and the printed circuit board (18), **characterized in that** the printed circuit board (18) is partially fixed to the support plate (11) at two board edges (181, 182) which are averted from one another, and **in that** the electrical connections are formed by stiff, stable pins (19) which are firstly pressed into the printed circuit board (18) with a press-fit and secondly are firmly connected to the contact ends (151).

2. Brush holder according to Claim 1, **characterized in that** the printed circuit board (18) is partially fixed such that the said printed circuit board (18) can tilt slightly in the plane of the board.

3. Brush holder according to Claim 1 or 2, **characterized in that** the printed circuit board (18) is fixed by means of two pockets (20) which are opposite to and at a distance from one another and into which the printed circuit board (18) is inserted with a section which extends only over part of its board edge length.

4. Brush holder according to Claim 3, **characterized in that** each pocket (20) has a pocket base (201), a pocket opening (202), which is opposite this pocket base, for inserting the printed circuit board (18), and three pocket walls (203, 204, 205) which are arranged at right angles to one another and surround the printed circuit board (18) along a section of the board edge region.

5. Brush holder according to Claim 4, **characterized in that** the pockets (20) have a substantially smaller depth than the board edge length of the printed circuit board (18), and **in that** the pockets (20) are matched to the board thickness of the printed circuit board (18) close to the pocket base (201).

6. Brush holder according to one of Claims 3-5, **characterized in that** the contact ends (151) of the plug contacts (15) protrude from one plate surface (112) of the support plate (11), and **in that** the contact ends (151) of the plug contacts (15) and the pockets (20), which are preferably integrally formed on the support plate (11), on the plate surface (111) which is averted from the said contact ends extend away from the support plate (11).

7. Brush holder according to Claim 5 or 6, **characterized in that** the pins (19) are arranged **in that** section of the printed circuit board (18) which protrudes from the pockets (20) and projects beyond the plate surface (112) of the support plate (11).

8. Brush holder according to Claim 7, **characterized in that** the pins (19) protrude from the printed circuit board (18) at right angles and extend approximately parallel to the support plate (11) when the printed circuit board (18) is fitted in the pockets (20).

9. Brush holder according to one of Claims 1-8, **characterized in that** the contact ends (151) are in the form of forks (16), **in that** the pins (19) rest in the fork openings in the forks (16), and **in that** the pins (19) are connected to the contact ends (151) by hot-stamping the forks (16).

10. Brush holder according to one of Claims 1-8, **characterized in that** the contact ends (151) are in the form of flat elements (17) against which the pins (19) rest, and **in that** the pins are connected to the contact ends (151) by flush welding.

## Revendications

1. Porte-balais pour machine électrique à collecteur comportant une plaque de support (11), un connecteur électrique (14) installé sur la plaque de support (11), ayant plusieurs contacts de connexion (15) avec des extrémités de contact (151) développées pour réaliser un contact électrique, une plaque de circuit (18) tenue à la plaque de support (11) et des liaisons électriques entre les extrémités de contact (151) des contacts de connexion (15) et la plaque de circuit (18),
**caractérisé en ce que**
la plaque de circuit (18) est fixée par ses deux arêtes opposées (181, 182), partiellement à la plaque de support (11) et
les liaisons électriques sont réalisées par des broches (19) rigides solides, enfoncées de force d'un côté par ajustage pressé dans la plaque de circuit (18) et reliées solidairement de l'autre côté aux extrémités de contact (151).

2. Porte-balais selon la revendication 1,
**caractérisé en ce que**
la fixation partielle de la plaque de circuit (18) est assurée pour que la plaque de circuit (18) risque pas de basculer dans le plan de la plaque.

3. Porte-balais selon la revendication 1 ou 2,
**caractérisé en ce que**
la fixation de la plaque de circuit (18) est réalisée à l'aide de deux cavités (50) en regard, écartées, recevant la plaque de circuit (18) par un segment qui ne correspond qu'à une partie de la longueur de l'arête.

4. Porte-balais selon la revendication 3,
**caractérisé en ce que**
chaque cavité (20) comporte un fond (201), une ouverture de cavité (202) en regard du fond pour introduire la plaque de circuit (18) et trois parois de cavité (203, 204, 205) à angle droit, entourant la plaque de circuit (18) le long d'un segment de l'arête de plaque.

5. Porte-balais selon la revendication 4,
**caractérisé en ce que**
les cavités (20) ont une profondeur beaucoup plus faible que la longueur de l'arête de la plaque de circuit (18) et
les cavités (20) sont ajustées à l'épaisseur de la plaque de circuit (18) au niveau du fond de cavité (201).

6. Porte-balais selon l'une des revendications 3 à 5,
**caractérisé en ce que**
les extrémités de contact (151) des fiches de contact (15) sont en saillie d'une surface (112) de la plaque de support (11) et
les extrémités de contact (151) des fiches de contact (15) et les cavités (20) formées dans la plaque de support (11) dépassent de la surface opposée (111) de la plaque de support (11).

7. Porte-balais selon les revendications 5 ou 6,
**caractérisé en ce que**
les broches (19) sont prévues dans le segment de la plaque de circuit (18) qui dépasse des cavités (20) par rapport à la surface (112) de la plaque de support (11).

8. Porte-balais selon la revendication 7,
**caractérisé en ce que**
les broches (19) sont en saillie perpendiculairement à la plaque de circuit (18) et s'étendent sensiblement parallèlement à la plaque de support (11) lorsque la plaque de circuit (18) est engagée dans les cavités (20).

9. Porte-balais selon l'une des revendications 1 à 8,
**caractérisé en ce que**
les extrémités de contact (151) sont en forme de fourche (16),
les broches (19) viennent dans les ouvertures des fourches (16) et
la fixation des broches (19) aux extrémités de contact (151) est réalisée par matriçage à chaud des fourches (16).

10. Porte-balais selon l'une des revendications 1 à 8,
**caractérisé en ce que**
les extrémités de contact (151) sont des pièces plates (17) contre lesquelles s'appuient les broches (19) et la fixation des broches aux extrémités de contact (151) est réalisée par soudage à plat.
